# FASCICULE DE BREVET EUROPEEN

(11) **EP 3 018 295 B1**
(45) Date de publication et mention de la délivrance du brevet: **03.07.2019**
(21) Numéro de dépôt: 15190956.1
(22) Date de dépôt: 22.10.2015
(51) Int. Cl.: F01D 9/04, F01D 25/24

(54) **STATOR MIXTE DE COMPRESSEUR DE TURBOMACHINE AXIALE**
GEMISCHTER KOMPRESSORSTATOR EINES AXIALEN TURBOTRIEBWERKS
MIXED STATOR OF AXIAL TURBINE-ENGINE COMPRESSOR

(30) Priorité: 06.11.2014 BE 201400806
(43) Date de publication de la demande: 11.05.2016
(73) Titulaire: Safran Aero Boosters SA, 4041 Herstal (BE)
(72) Inventeur: CORTEQUISSE, Jean-François, 3870 Heers (BE)
(74) Mandataire: Lecomte & Partners

(56) Documents cités:
- EP-A1- 2 860 354
- US-A1- 2011 171 018
- US-A1- 2014 212 284

## Description

### Domaine technique

Le domaine de la présente invention est celui des turbomachines, notamment des turboréacteurs pour aéronefs. L'invention traite plus particulièrement d'une architecture de stator de turbomachine axiale.

### Technique antérieure

Une turbomachine présente couramment plusieurs rangées annulaires d'aubes statoriques avec diverses architectures. Ces rangées se distinguent par leurs modes de fixation des aubes les unes aux autres, ou même au type de liaison avec un carter externe supportant chaque aube. Afin de canaliser un flux primaire et d'assurer une étanchéité avec le rotor, une rangée supporte généralement une virole interne fixée aux extrémités internes des aubes statoriques. Ces viroles sont soumises à des efforts axiaux notables, dans le contexte d'un compresseur basse pression elles subissent des phénomènes de pompage, ou des ingestions.

Le document EP2339120 A1 divulgue une architecture de redresseur de compresseur basse pression de turbomachine axiale. Le redresseur présente une architecture mixte car au sein d'une même rangée annulaire d'aubes il présente des aubes structurantes, et des aubes aéro. Les aubes aéro sont reliées à des viroles intérieures elles-mêmes fixées aux aubes structurantes. Les viroles intérieures composites sont fixées aux aubes structurantes métalliques à l'aide d'axes, ce qui constitue une architecture rigide ne générant pas de perturbations aérodynamiques. Cependant, la rigidité de l'ensemble reste limitée.

Le document US2011/0171018 A1 divulgue un stator de turbomachine axiale. Le stator inclue une virole interne, une virole externe et une rangée annulaire d'aubes ; dont des aubes support et des aubes auxiliaires disposées par groupe entre les aubes support.

Le document US2014/0212284 A1 divulgue une buse de turbomachine. La buse regroupe une bande interne et une bande externe qui sont reliées par des aubes structurantes. Des aubes non-structurantes sont ajoutées entre chaque paire d'aubes structurantes. La bande interne présente des évidements recevant plusieurs aubes non-structurantes, ces évidements étant refermés par des segments arrière qui épousent par ailleurs les aubes non-structurantes.

### Résumé de l'invention

### Problème technique

L'invention a pour objectif de résoudre au moins un des problèmes posés par l'art antérieur. Plus précisément, l'invention a pour objectif d'améliorer la rigidité d'un stator de turbomachine axiale comprenant une rangée annulaire d'aubes. L'invention a également pour objectif d'améliorer le maintien axial de viroles internes rapportées entre des aubages structurants d'un stator de turbomachine axiale.

### Solution technique

On aura bien compris que l'invention apporte un blocage axial entre une aube support et un segment de virole interne grâce à des facettes orientées vers l'amont et/ou vers l'aval, lesdites facettes étant à une ou à chaque interface entre une aube support et un segment de virole.

L'invention a pour objet un stator de turbomachine axiale, notamment de compresseur, le stator comportant : une rangée annulaire d'aubes statoriques comprenant des aubes support monobloc avec des plateformes internes, et des aubes de liaison les aubes support et les aubes de liaison étant agencées axialement à la même position, formant une rangée annulaire d'aubes régulièrement espacées angulairement les unes des autres; une virole interne formée par les plateformes internes des aubes support et des segments de virole interne fixés aux aubes de liaison ; remarquable en ce qu'au moins une plateforme interne d'aube support comprend au moins deux surfaces de contact généralement perpendiculaires a l'axe de rotation de la turbomachine, et qui sont en contact d'un même segment interne de sorte a pouvoir le bloquer.

La surface de contact permet de bloquer le segment de virole interne en ce sens qu'elle forme une butée axiale pour ledit segment.

Selon un mode avantageux de l'invention, le stator comprend au moins un caisson monobloc comprenant plusieurs aubes support et une plateforme interne commune à chacune de ses aubes support, éventuellement le caisson comprend une plateforme externe commune à chacune de ses aubes support.

Selon un mode avantageux de l'invention, au moins un ou chaque caisson comprend plusieurs, préférentiellement trois, aubes support décrivant une portion angulaire de la rangée annulaire d'aubes, éventuellement l'inclinaison moyenne de la corde de chaque aube support du caisson par rapport à l'axe de rotation est supérieure à 5°, préférentiellement supérieure à 10°, plus préférentiellement supérieure à 20°.

Selon un mode avantageux de l'invention, chaque aube support présente une surface intrados concave, préférentiellement incurvée au niveau de sa jonction avec sa plateforme interne.

Selon un mode avantageux de l'invention, préférentiellement au moins une ou chaque plateforme interne d'aube support comprend au moins quatre surfaces de contact généralement perpendiculaires à l'axe de rotation de la turbomachine, et qui sont en contact de deux segments internes distincts.

Selon un mode avantageux de l'invention, chaque segment interne est ajusté mécaniquement à chaque plateforme interne avec laquelle il est en contact de sorte à permettre un maintien par emboîtement, préférentiellement chaque paire de surfaces de contact qui coopère avec un même segment interne est ajustée mécaniquement avec ledit segment de sorte à permettre une rétention radiale par emboîtement.

Selon un mode avantageux de l'invention, les segments internes sont intercalés entre les plateformes internes d'aubes support, éventuellement les segments et les plateformes forment une alternance généralement régulière.

Selon un mode avantageux de l'invention, les segments de virole interne comprennent des ouvertures ou des cavités dans lesquelles sont fixées les aubes de liaison, au moins une ou chaque fixation entre un segment et une aube de liaison dans une ouverture ou une cavité comprend une plaquette, et/ou un matériau de scellement et/ou un joint élastomère tel du silicone.

Selon un mode avantageux de l'invention, les aubes support et les aubes de liaison comprennent chacune une pale destinée à s'étendre radialement dans un flux primaire de la turbomachine, lesdites pales présentant des épaisseurs maximales égales, préférentiellement lesdites pales sont identiques.

Selon un mode avantageux de l'invention, chaque surface de contact de plateforme interne est configurée pour permettre une introduction radiale d'un segment interne depuis l'intérieur.

Selon un mode avantageux de l'invention, au moins une ou chaque plateforme interne est profilée et comprend un profil présentant une portion axiale qui s'étend principalement axialement et deux portions radiales qui s'étendent principalement radialement vers l'intérieur depuis la portion axiale, chaque portion radiale étant disposée à une des extrémités amont et aval de la portion axiale, chaque surface de contact étant formée sur l'une des portions radiales.

Selon un mode avantageux de l'invention, au moins une ou chaque aube support est venue de matière, préférentiellement par fabrication additive à base de poudre, éventuellement une poudre métallique telle qu'une poudre titane.

Selon un mode avantageux de l'invention, au moins un ou chaque segment interne est réalisé en un matériau composite, notamment avec des fibres et une matrice organique telle du polyétherimide ou du polyesther.

Selon un mode avantageux de l'invention, le stator comprend des joints d'étanchéité entre les plateformes internes et les segments internes, préférentiellement les joints d'étanchéité sont des joints élastomères.

Selon un mode avantageux de l'invention, le stator comprend deux segments internes en contact d'une même plateforme interne, ladite plateforme interne et lesdits segments définissent entre eux une alvéole éventuellement ouverte vers l'intérieur.

Selon un mode avantageux de l'invention, au moins un ou chaque segment comprend au moins une, préférentiellement plusieurs surfaces de contact correspondantes destinées à venir en contact de chaque surface de contact d'une plateforme associée lors de leur assemblage.

Selon un mode avantageux de l'invention, au moins une ou chaque plateforme interne comprend une gorge interne ouverte radialement vers l'intérieur, le segment comprend une portion de moindre épaisseur radiale et/ou axiale introduite dans la gorge interne de l'aube support associée.

Selon un mode avantageux de l'invention, le stator comprend un carter externe formé de deux demi-coquilles, chacune dotée d'une paroi semi-circulaire et de brides axiales de fixation pour réunir les demi-coquilles, une plateforme interne d'aube support étant alignée avec chaque bride axiale selon la circonférence.

Selon un mode avantageux de l'invention, deux plateformes internes de deux aubes supports ou de deux caissons différents sont disposées de part et d'autre d'une interface entre des brides axiales fixées ensemble, éventuellement lesdites plateformes internes sont en contact.

Selon un mode avantageux de l'invention, chaque plateforme interne présente deux bords opposés selon la circonférence de la rangée d'aubes, l'aube support correspondant à chaque plateforme présente au moins un ou des axes de fixation disposés à distance desdits bords, préférentiellement à distance de chaque bride axiale de demi-coquille.

Selon un mode avantageux de l'invention, chaque pale est délimitée radialement par chaque virole du stator.

Selon un mode avantageux de l'invention, au moins une ou chaque surface de contact en contact axialement d'un segment forme une butée axiale pour ledit segment.

Selon un mode avantageux de l'invention, chaque aube support d'un caisson comprend une direction d'empilement, les directions d'empilements des aubes support d'un caisson étant régulièrement inclinées les unes par rapport aux autres.

Selon un mode avantageux de l'invention, chaque demi-coquille est réalisée en un matériau composite à matrice organique, préférentiellement chaque demi-coquille est venue de matière.

L'invention a également pour objet une turbomachine comprenant un stator, remarquable en ce que le stator est conforme à l'invention, éventuellement le stator est un stator de compresseur basse pression.

### Avantages apportés

Une surface de contact orientée vers l'amont permet de bloquer les mouvements d'un segment de virole vers l'aval et inversement. En particulier, une surface orientée vers l'aval limite le déplacement vers l'amont d'un segment en cas de pompage dans un compresseur. La combinaison de deux surfaces de contact orientées en amont et en aval limite les vibrations axiales du segment de virole. Ainsi l'invention permet de rigidifier le stator en formant des butées axiales grâce aux surfaces de contact.

L'aspect monobloc des aubes support améliore la rigidité du stator puisque le jeu entre une pale d'aube support et la plateforme interne correspondante est supprimé. Le procédé de fabrication additive autorise la réalisation de formes plus complexes, plus incurvées, avec d'avantage de variations d'épaisseurs. Un caisson avec plusieurs aubes réalisé de la sorte sera plus résistant, plus rigide ; ce qui permet d'améliorer encore la rigidité globale du stator associé. Un caisson et chaque aube support forme un renfort, un point dur dans le stator. Les considérations de masse, de coût, de tenue mécanique et de réparation sont également optimisées, éventuellement conjointement.

### Brève description des dessins

La figure 1 représente une turbomachine axiale selon l'invention.
La figure 2 est un schéma d'un compresseur de turbomachine selon l'invention.
La figure 3 esquisse une rangée d'aubes d'un stator selon l'invention.
La figure 4 illustre une portion du stator selon l'invention.
La figure 5 représente la jonction entre des demi-coquilles du stator selon l'invention.
La figure 6 illustre une aube support du stator selon l'invention.
La figure 7 illustre une portion de segment de virole interne du stator selon l'invention.

### Description des modes de réalisation

Dans la description qui va suivre, les termes intérieur ou interne et extérieur ou externe renvoient à un positionnement par rapport à l'axe de rotation d'une turbomachine axiale. La direction axiale correspond à la direction le long de l'axe de rotation de la turbomachine.

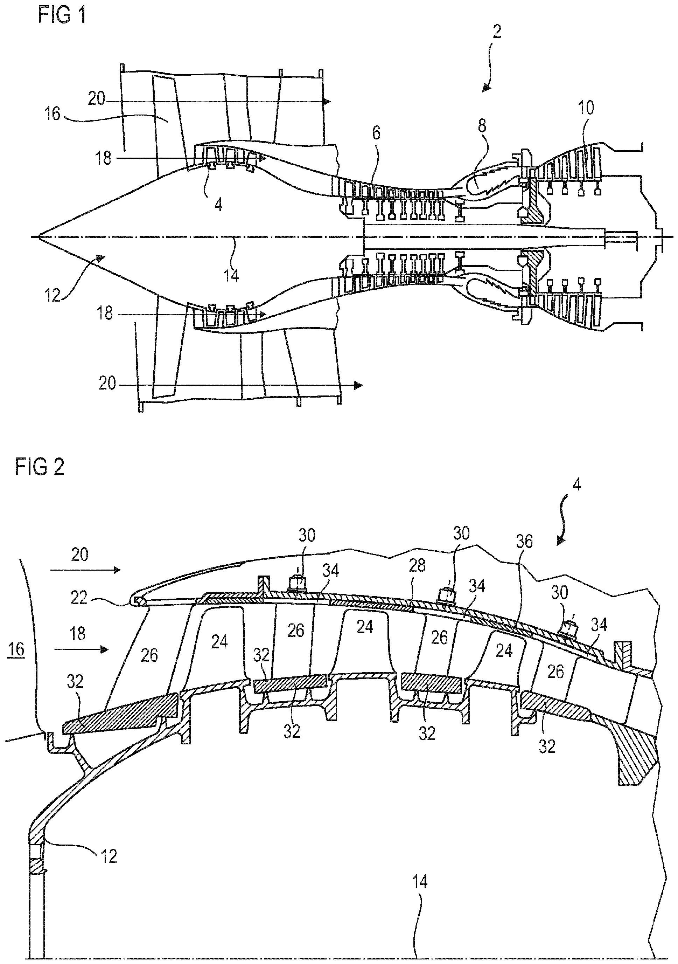

La figure 1 représente de manière simplifiée une turbomachine axiale. Il s'agit dans ce cas précis d'un turboréacteur double-flux. Le turboréacteur 2 comprend un premier niveau de compression, dit compresseur basse-pression 4, un deuxième niveau de compression, dit compresseur haute-pression 6, une chambre de combustion 8 et un ou plusieurs niveaux de turbines 10. En fonctionnement, la puissance mécanique de la turbine 10 transmise via l'arbre central jusqu'au rotor 12 met en mouvement les deux compresseurs 4 et 6. Ces derniers comportent plusieurs rangées d'aubes de rotor associées à des rangées d'aubes de stators. La rotation du rotor autour de son axe de rotation 14 permet ainsi de générer un débit d'air et de comprimer progressivement ce dernier jusqu'à l'entrée de la chambre de combustion 8. Des moyens de démultiplication peuvent augmenter la vitesse de rotation transmise aux compresseurs.

Un ventilateur d'entrée communément désigné fan ou soufflante 16 est couplé au rotor 12 et génère un flux d'air qui se divise en un flux primaire 18 traversant les différents niveaux sus mentionnés de la turbomachine, et un flux secondaire 20 traversant un conduit annulaire (partiellement représenté) le long de la machine pour ensuite rejoindre le flux primaire en sortie de turbine. Le flux secondaire peut être accéléré de sorte à générer une réaction de poussée. Les flux primaire 18 et secondaire 20 sont des flux annulaires, ils sont canalisés par le carter de la turbomachine. A cet effet, le carter présente des parois cylindriques ou viroles qui peuvent être internes et externes.

La figure 2 est une vue en coupe d'un compresseur d'une turbomachine axiale telle que celle de la figure 1. Le compresseur peut être un compresseur basse-pression 4. On peut y observer une partie du fan 16 et le bec de séparation 22 du flux primaire 18 et du flux secondaire 20. Le rotor 12 comprend plusieurs rangées annulaires d'aubes rotoriques 24, en l'occurrence trois.

Le compresseur basse pression 4 comprend un stator avec un carter externe 28. Ce dernier peut supporter mécaniquement plusieurs redresseurs, en l'occurrence quatre, qui contiennent chacun une rangée annulaire d'aubes statoriques 26. Les redresseurs sont associés au fan 16 ou à une rangée d'aubes rotoriques pour redresser le flux d'air, de sorte à convertir la vitesse du flux en pression statique. Les aubes statoriques 26 s'étendent essentiellement radialement depuis un carter extérieur 28, et peuvent y être fixées à l'aide d'axes 30.

Le stator du compresseur 4 comprend par ailleurs des viroles internes 32 qui sont chacune liée aux extrémités internes des aubes statoriques 26 tandis que les extrémités externes peuvent être liées à des viroles externes 34. Eventuellement certaines aubes sont reliées individuellement au carter externe via une plateforme de fixation propre. Les viroles internes 32 peuvent être recouvertes à l'intérieur de pistes d'abradable pour former un joint d'étanchéité qui coopère avec des léchettes formées sur la surface externe du rotor 12.

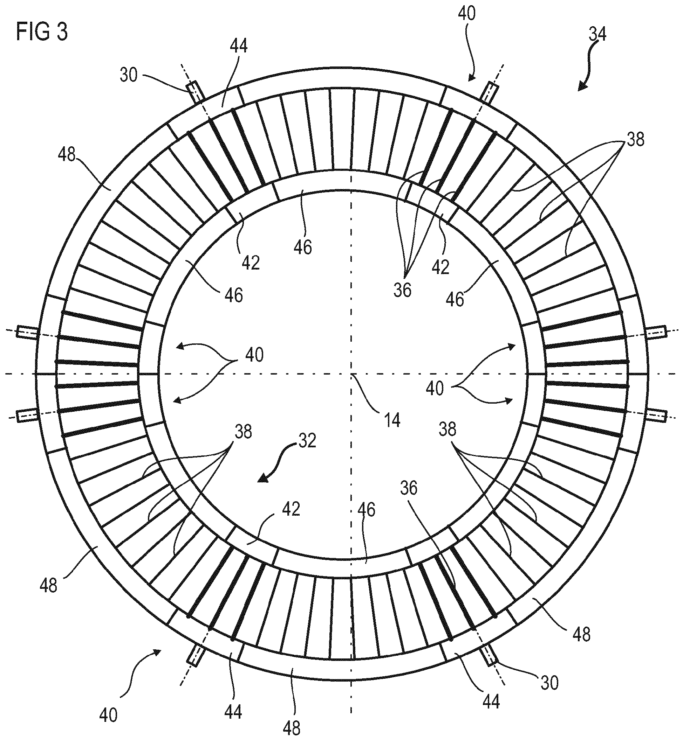

La figure 3 représente une portion de stator d'un compresseur tel que celui décrit en figure 2. Y sont visibles une rangée annulaire d'aubes, une virole externe 34 et une virole interne 32. Le stator est vu selon l'axe de rotation 14 de la turbomachine, qui peut coïncider avec l'axe de symétrie du stator ou de la rangée d'aube.

La rangée annulaire d'aubes du stator comporte plusieurs types d'aubes statoriques dont des aubes support 36 et des aubes de liaisons 38. Les aubes statoriques (36 ; 38) sont matérialisées à l'aide de traits illustrant leurs bords d'attaque. De manière arbitraire, les aubes support 36 sont représentées à l'aide d'un trait plus épais que les aubes de liaison 38, mais dans la pratique les aubes de la rangée sont de même épaisseur, par exemple de même épaisseur maximale, de même géométrie pour éviter de former des hétérogénéités dans le flux annulaire. Avantageusement, les aubes d'une même rangée sont identiques.

Les aubes (36 ; 38) de la rangée sont régulièrement espacées les unes des autres, et présentent une même orientation angulaire dans le flux. Elles peuvent être inclinées régulièrement les unes par rapport aux autres. Bien que soixante-douze aubes statoriques (36 ; 38) soient représentées, la rangée peut en comprendre davantage, par exemple plus de cent aubes. Alternativement, la rangée peut comprendre moins d'aubes, par exemple moins de cinquante.

Les aubes de liaison 38 sont réparties en plusieurs groupes continus, en l'occurrence en six groupes de huit aubes de liaison 38. Les aubes support 36 peuvent être réunies dans des caissons aubagés 40 qui peuvent être réalisés de manière monoblocs en soudant différentes parties. Ainsi, elles forment un lien mécanique rigide et durable entre le carter externe et la virole interne 32. Elles assurent le rôle de piliers entre le carter externe et la virole interne 32.

Chaque caisson 40 peut comprendre une, ou préférentiellement plusieurs aubes support 38, ici trois aubes supports 38. Ce nombre de trois aubes support 40 optimise la rigidité du caisson et la masse du stator, grâce à l'inclinaison radiale des aubes, à leur géométrie, et à l'emploi de différents matériaux tels que ceux détaillés ci-après.

Chaque caisson 40 peut comprendre une plateforme interne 42 et une plateforme externe 44. Ces plateformes (42 ; 44) sont généralement arquées ou cintrées pour suivre la forme de cercle de la virole (32 ; 34) correspondante. En complément, le stator peut comprendre des segments de virole interne 46 de sorte à compléter une surface annulaire interne qui délimite et guide le flux interne de la turbomachine. Par segment de virole 46, on entend un secteur angulaire d'un cercle. De même, le stator peut comprendre des segments de virole externes 48 entre des plateformes externes 44

Les segments internes 46 sont avantageusement réalisés en matériaux composites avec des fibres de verre ou de carbone, et une résine PEI. Les plateformes internes 42 de caisson 40 sont intercalées entre les segments internes 46, ils forment une alternance. L'alternance peut être majoritairement régulière. Le stator peut présenter une portion inférieure et une portion supérieure, l'alternance étant régulière dans chaque portion inférieure et supérieure

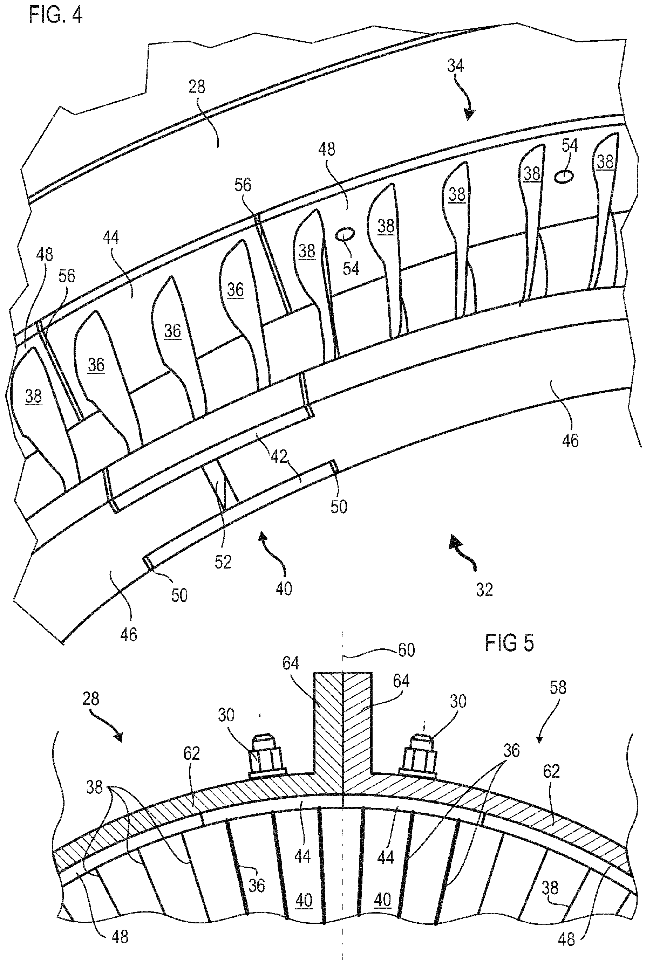

La figure 4 illustre une portion de stator selon une vue isométrique observée depuis l'intérieur du stator. Une portion de rangée annulaire d'aubes (36 ; 38), une virole externe 34, une virole interne 32, le carter externe 28 apparaissent.

La plateforme interne 42 du caisson 40 permet de relier deux segments internes 46. Des joints 50 sont disposés aux interfaces entre les plateformes internes et les segments internes de virole. Ces joints 50 assurent une étanchéité et permettent une dilatation différentielle puisque la plateforme interne 42 et les segments peuvent être réalisés en des matériaux différents.

A l'intérieur de la plateforme interne 42, les extrémités des segments internes bordent une alvélole 52. Celle-ci forme un jeu permettant encore une dilation différentielle pour autoriser un rapprochement des extrémités selon la circonférence.

Les segments externes 48 sont plaqués contre la surface interne du carter externe 28. Ils peuvent y être fixés à l'aide d'axes traversants (non représentés) ; à cet égard les segments externes 48 présentent des orifices de fixation 54. D'éventuels joints de dilatation 56 peuvent être placés aux jonctions entre les plateformes externes 44 et les segments externes 48.

La figure 5 représente une portion de stator d'un compresseur tel que celui décrit en figure 2. Y sont visibles des aubes support 36 d'un caisson 40, des aubes de liaison 36, des plateformes externes 44, des segments externes 48, et une portion de carter externe 28.

Le carter externe peut être celui du compresseur, par exemple basse pression. Ce carter peut être formé de deux demi-coquilles 58 séparées selon un plan axial 60 ; c'est-à-dire passant par l'axe de rotation de la turbomachine qui correspond avec l'axe de symétrie générale de la forme torique du stator. Le plan axial 60 est représenté verticalement, en pratique il peut être horizontal par rapport à la direction normale de montage de la turbomachine. Chaque demi-coquille 58 comprend une paroi 62 semi-circulaire formant généralement un demi-tube ou une demi-ogive. Les parois 62 se terminent selon la circonférence par des brides axiales de fixation 64. Ces brides 64 s'étendent radialement vers l'extérieur de la paroi 62, du côté opposé au flux annulaire. Avantageusement, chaque demi-coquille 58 est réalisée en un matériau composite pour l'alléger tout en préservant sa rigidité. Chaque demi-coquille 58 peut être venue de matière pour améliorer sa longévité, sa rigidité et son étanchéité.

Au moins un ou chaque caisson 40 est fixé à la paroi 62 d'une demi-coquille 58 à l'aide d'un axe 30, par exemple avec un lockbolt. Cet axe 60 est à distance, selon la circonférence, de la bride axiale 64 voisine ce qui facilite l'utilisation des outils de verrouillage des lockbolt. Au moins un cou chaque axe 30 peut être au centre de la plateforme externe 44 associée, entre ses bords selon la circonférence.

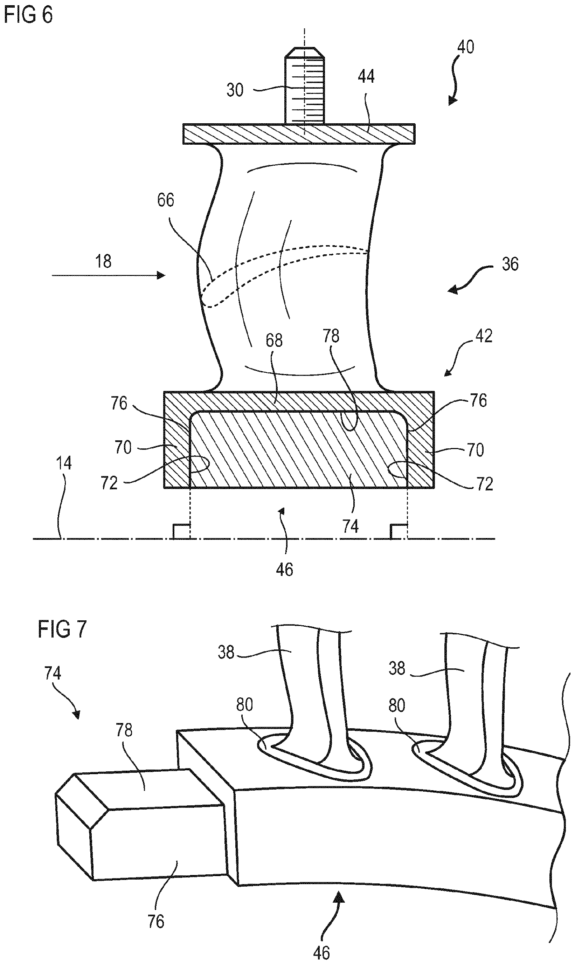

La figure 6 ébauche une coupe du stator au niveau d'une jonction entre une plateforme interne 42 et un segment interne 46. La coupe montre en particulier une aube support 36 d'un caisson 40, il pourrait également s'agir d'une aube support 36 isolée. L'axe de rotation 14 est tracé pour l'orientation spatiale.

L'aube support 36 et/ou un caisson 40 avec plusieurs aubes support (une seule étant ici représentée) peut être venue de matière, et peut être réalisé(e) par fabrication additive à base de poudre, par exemple une poudre titane pour priviléger la rigidité. Cette technologie offre une grande liberté dans les formes réalisables. Toutefois, cet aspect de l'invention n'est pas indispensable puisque le moulage peut être utilisé.

La plateforme externe 44 peut présenter un profil généralement plat. Elle peut inclure un axe de fixation 30 tel que présenté ci-dessus. L'axe 30 s'étend radialement dans la direction opposée à la pale de l'aube 36. Celle-ci peut présenter un profil aérodynamique 66 cambré (ici représenté en plan), avec une surface intrados concave. En particulier, les extrémités radiales de la pale qui sont jointes aux plateformes (42 ; 44) sont incurvées. La corde générale de l'aube 36 est inclinée par rapport à l'axe de rotation 14. L'angle moyen entre la corde et l'axe de rotation, ou angle de calage, est supérieur à 5°, préférentiellement supérieur à 15°. Cet angle est mesuré dans un plan parallèle à l'axe de rotation 14. Il peut être mesuré sur le profil à mi-hauteur radiale de la pale de l'aube support 36.

Cette géométrie améliore la raideur de la liaison entre une pale et ses plateformes (42 ; 44), ce qui contribue encore à rigidifier le caisson 40 auquel elle appartient. Par pale, on entend la portion de l'aube qui s'étend radialement dans le flux 18, la pale peut être délimitée radialement par des viroles et/ou des plateformes.

La plateforme interne 42 peut présenter un profil général, qui peut être pivoté autour de l'axe de rotation pour générer la plateforme interne 42. Le profil peut présenter une portion axiale 68 qui s'étend essentiellement axialement. Le profil peut se terminer axialement par des portions radiales 70 qui bordent la portion axiale 68 et qui s'étendent essentiellement radialement. Les portions radiales 70 peuvent s'étendre perpendiculairement à l'axe de rotation 14. La portion axiale 68 forme généralement une portion de tube, les portions radiales 70 forment des brides radiales.

La plateforme interne 68 comprend au moins une, préférentiellement au moins deux surfaces de contact 72, ou facettes 72, qui s'étendent généralement radialement et selon la circonférence du stator. Les surfaces de contact 72 peuvent être perpendiculaires à l'axe de rotation 14, et éventuellement parallèles l'une à l'autre. Ces surfaces de contact 72 forment un premier jeu de surfaces de contact 72 disposées à une extrémité, ou côté, de la plateforme 42 selon la circonférence. La plateforme interne 42 peut présenter un autre jeu de surfaces de contact 72 similaires, ledit jeu étant placé l'extrémité opposée de la plateforme 42 selon la circonférence. Chaque paire de surfaces de contact 72 permet de bloquer axialement une portion d'assemblage 74 de segment de virole qui est placée entre elles.

La plateforme interne 42, via sa portion axiale 68 et ses portions radiales 70, peut délimiter une gorge entre ses surfaces de contact 72. La gorge peut former une portion angulaire de gorge annulaire qui est ouverte radialement vers l'intérieur. La gorge reçoit au moins une ou deux portions d'assemblage 74 de segments internes 46. Chaque portion d'assemblage comprend des surfaces de contact correspondantes 76 qui sont au contact des surfaces de contact de la plateforme interne 42. Chaque surface extérieure 76 de la portion d'assemblage 74 du segment épouse la surface interne de la gorge de plateforme interne. Les surfaces (76 ; 78) peuvent être ajustées mécaniquement pour assurer un encastrement ; ou emboîtement. La plateforme 42 joue un rôle de manchon solidarisant deux segments de virole 46. Ce résultat est atteint en réduisant les tolérances et en réalisant un montage en force ; c'est-à-dire en exerçant un effort supérieur à 10 N, préférentiellement supérieur à 100 N pour que le segment rentre dans la plateforme.

Les surfaces de contact 72 sont en regard l'une de l'autre, à l'intérieur d'une plateforme 42 avec un profil en « U » inversé. Suivant une variante de l'invention, elles pourraient être orientées dans des directions opposées l'une à l'autre, par exemple en les formant sur une même bride radiale centrale. Le profil de la plateforme peut alors être en forme de la lettre « T ». Dans cette variante, le segment de virole présente une forme de fourche qui pince la bride radiale centrale.

La figure 7 représente une portion interne de stator d'un compresseur tel que celui décrit en figure 2. Y sont visibles une série d'aubes de liaison 38, un segment interne 46.

La portion d'assemblage 74 forme une zone de moindre épaisseur radiale et/ou de moindre largeur selon la direction axiale. Cette portion 74 présente une section réduite par rapport au reste du segment 46 et par rapport à la plateforme interne dans laquelle elle est destinée à se loger. De la sorte, une continuité de surface est assurée.

Le ou chaque segment interne 46 présente une paire de surfaces de contact correspondantes 76 à chaque extrémité, les extrémités étant entendues selon la circonférence. Les paires permettent ainsi d'emboîter un segment 46 entre deux aubes support ou deux caissons, en particulier via leurs plateformes internes. Ainsi, la succession des jonctions entre les plateformes internes et les segments 46 forme une arche ou un cercle rigide grâce aux emboîtements répétés.

Les segments internes 46 comprennent des ouvertures 80 ou des cavités 80 pour y introduire les extrémités internes des aubes de liaison 38. Celles-ci sont fixées dans les ouvertures ou les cavités à l'aide d'éléments de rétention telle une plaquette ou une baguette introduite dans une découpe de l'extrémité de l'aube de liaison 38. La fixation peut également s'effectuer à l'aide d'un matériau de scellement qui remplit une cavité 80 ou occulte une ouverture 80. Un joint élastomère tel du silicone peut être employé.

Dans la description qui précède, chaque caractéristique présentée pour un caisson peut s'appliquer à une aube support isolée et inversement.

## Revendications

1. Stator de turbomachine axiale (2), notamment de compresseur (4 ; 6), le stator comportant :
une rangée annulaire d'aubes statoriques comprenant des aubes support (36) monobloc avec des plateformes internes (42), et des aubes de liaison (38), les aubes support (36) et les aubes de liaison (38) étant agencées axialement à la même position, formant une rangée annulaire d'aubes (36, 38) régulièrement espacées angulairement les unes des autres ;
une virole interne (32) formée par les plateformes internes (42) des aubes support (36) et des segments de virole interne (46) fixés aux aubes de liaison (38);
**caractérisé en ce**
**qu'**au moins une plateforme interne (42) d'aube support (36) comprend au moins deux surfaces de contact (72) généralement perpendiculaires à l'axe de rotation (14) de la turbomachine (2), et qui sont en contact d'un même segment interne (46) de sorte à pouvoir le bloquer.

2. Stator selon la revendication 1, **caractérisé en ce qu'**il comprend au moins un caisson monobloc (40) comprenant plusieurs aubes support (36) et une plateforme interne (42) commune à chacune de ses aubes support (36), éventuellement le caisson (40) comprend une plateforme externe (44) commune à chacune de ses aubes support (36).

3. Stator selon la revendication 2, **caractérisé en ce qu'**au moins un ou chaque caisson (40) comprend plusieurs, préférentiellement trois, aubes support (36) (36) décrivant une portion angulaire de la rangée annulaire d'aubes, éventuellement l'inclinaison moyenne de la corde de chaque aube support (36) du caisson (40) par rapport à l'axe de rotation (14) est supérieure à 5°, préférentiellement supérieure à 10°, plus préférentiellement supérieure à 20°.

4. Stator selon l'une des revendications 1 à 3, **caractérisé en ce que** chaque plateforme interne (42) d'aube support (36) comprend au moins deux surfaces de contact (72) généralement perpendiculaires à l'axe de rotation (14) de la turbomachine (2), et qui sont en contact d'un même segment interne (46), préférentiellement au moins une ou chaque plateforme interne (42) d'aube support (36) comprend au moins quatre surfaces de contact (72) généralement perpendiculaires à l'axe de rotation (14) de la turbomachine (2), et qui sont en contact de deux segments internes (46) distincts.

5. Stator selon l'une des revendications 1 à 4, **caractérisé en ce que** chaque segment interne (46) est ajusté mécaniquement à chaque plateforme interne (42) avec laquelle il est en contact de sorte à permettre un maintien par emboîtement, préférentiellement chaque paire de surfaces de contact (72) qui coopère avec un même segment interne (46) est ajustée mécaniquement avec ledit segment (46) de sorte à permettre une rétention radiale par emboîtement.

6. Stator selon l'une des revendications 1 à 5, **caractérisé en ce que** les segments internes (42) sont intercalés entre les plateformes internes (42) d'aubes support (36), éventuellement les segments et les plateformes forment une alternance généralement régulière.

7. Stator selon l'une des revendications 1 à 6, **caractérisé en ce que** les segments de virole interne (46) comprennent des ouvertures (80) ou des cavités (80) dans lesquelles sont fixées les aubes de liaison (38), au moins une ou chaque fixation entre un segment et une aube de liaison (38) dans une ouverture (80) ou une cavité (80) comprend une plaquette, et/ou un matériau de scellement et/ou un joint élastomère tel du silicone.

8. Stator selon l'une des revendications 1 à 7, **caractérisé en ce qu'**au moins une ou chaque plateforme interne (42) est profilée et comprend un profil présentant une portion axiale (68) qui s'étend principalement axialement et deux portions radiales (70) qui s'étendent principalement radialement vers l'intérieur depuis la portion axiale (68), chaque portion radiale (70) étant disposée à une des extrémités amont et aval de la portion axiale (68), chaque surface de contact (72) étant formée sur l'une des portions radiales (70).

9. Stator selon l'une des revendications 1 à 8, **caractérisé en ce qu'**au moins une ou chaque aube support (36) est venue de matière, préférentiellement par fabrication additive à base de poudre métallique telle qu'une poudre titane ; et/ou au moins un ou chaque segment interne (46) est réalisé en un matériau composite, notamment avec des fibres et une matrice organique telle du polyétherimide ou du polyesther.

10. Stator selon l'une des revendications 1 à 9, **caractérisé en ce qu'**au moins un ou chaque segment (42) comprend au moins une, préférentiellement plusieurs surfaces de contact correspondantes destinées à venir en contact de chaque surface de contact d'une plateforme associée lors de leur assemblage.

11. Stator selon l'une des revendications 1 à 10, **caractérisé en ce qu'**au moins une ou chaque plateforme interne (42) comprend une gorge interne ouverte radialement vers l'intérieur, le segment (42) comprend une portion de moindre épaisseur radiale et/ou axiale introduite dans la gorge interne de l'aube support (36) associée.

12. Stator selon l'une des revendications 1 à 11, **caractérisé en ce qu'**il comprend un carter externe (28) formé de deux demi-coquilles, chacune dotée d'une paroi semi-circulaire et de brides axiales de fixation (64) pour réunir les demi-coquilles, une plateforme interne (42) d'aube support (36) étant alignée avec chaque bride axiale (64) selon la circonférence.

13. Stator selon l'une des revendications 1 à 12, **caractérisé en ce que** chaque plateforme interne (42) présente deux bords opposés selon la circonférence de la rangée d'aubes, l'aube support (36) correspondant à chaque plateforme (42) présente au moins un ou des axes de fixation (30) disposés à distance desdits bords, préférentiellement à distance de chaque bride axiale (64) de demi-coquille.

14. Turbomachine (2) comprenant un stator, **caractérisée en ce que** le stator est conforme à l'une des revendications 1 à 13, éventuellement le stator est un stator de compresseur basse pression (4).

## Patentansprüche

1. Stator einer axialen Turbomaschine (2), insbesondere eines Kompressors (4, 6), wobei der Stator umfasst:
eine ringförmige Reihe von Statorblättern, die einteilige Stützblätter (36) mit internen Plattformen (42) und Verbindungsblätter (38) umfasst, wobei die Stützblätter (36) und die Verbindungsblätter (38) axial an der gleichen Position angeordnet sind und eine ringförmige Reihe von Blättern (36, 38) ausbilden, die voneinander jeweils gleich weit winkelbeabstandet sind;
einen internen Ring (32), der von den internen Plattformen (42) der Stützblätter (36) und von internen Ringsegmenten (46) ausgebildet wird, die an den Verbindungsblättern (38) befestigt sind;
**gekennzeichnet dadurch, dass**
zumindest eine interne Plattform (42) eines Stützblattes (36) zumindest zwei Kontaktoberflächen (72) umfasst, die im Wesentlichen senkrecht zu der Rotationsachse (14) der Turbomaschine (2) sind und die mit einem gleichen internen Segment (46) derart in Kontakt sind, dass sie es blockieren können.

2. Der Stator gemäß Anspruch 1, **gekennzeichnet dadurch, dass** er zumindest ein einteiliges Gehäuse (40) umfasst, welches eine Mehrzahl von Stützblättern (36) und eine interne Plattform (42) umfasst, die jeder ihrer Stützblätter (36) gemeinsam ist, und wobei das Gehäuse (40) gegebenenfalls eine externe Plattform (44) umfasst, die jeder ihrer Stützblätter (36) gemeinsam ist.

3. Der Stator gemäß Anspruch 2, **gekennzeichnet dadurch, dass** zumindest ein oder jedes Gehäuse (40) eine Mehrzahl, vorzugsweise drei, Stützblätter (36) umfasst, die einen Winkelbereich der ringförmigen Reihe von Blättern beschreiben, wobei gegebenenfalls die mittlere Neigung der Profilsehne von jedem Stützblatt (36) des Gehäuses (40) relativ zu der Rotationsachse (14) größer als 5°, vorzugsweise größer als 10°, noch bevorzugter größer als 20° ist.

4. Der Stator gemäß einem der Ansprüche 1 bis 3, **gekennzeichnet dadurch, dass** jede interne Plattform (42) des Stützblattes (36) zumindest zwei Kontaktoberflächen (72) umfasst, die im Wesentlichen senkrecht zu der Rotationsachse (14) der Turbomaschine (2) und in Kontakt mit einem gleichen internen Segment (46) sind, wobei vorzugsweise zumindest eine oder jede der internen Plattformen (42) des Stützblattes (36) zumindest vier Kontaktoberflächen (72) umfasst, die im Wesentlichen senkrecht zu der Rotationsachse (14) der Turbomaschine (2) und in Kontakt mit dem zwei verschiedenen internen Segmenten (46) sind.

5. Der Stator gemäß einem der Ansprüche 1 bis 4, **gekennzeichnet dadurch, dass** jedes interne Segment (46) mechanisch an jede interne Plattform (42), mit der es in Kontakt ist, derart angepasst ist, um ein Halten durch ein Ineinandergreifen zu erlauben, wobei vorzugsweise jedes Paar Kontaktoberflächen (72), das mit einem gleichen internen Segment (46) zusammenwirkt, mechanisch an das besagte Segment (46) derart angepasst ist, um ein radiales Rückhalten durch Ineinandergreifen zu erlauben.

6. Der Stator gemäß einem der Ansprüche 1 bis 5, **gekennzeichnet dadurch, dass** sich die internen Segmente (42) zwischen den internen Plattformen (42) der Stützblätter (36) befinden, wobei die Segmente und die Plattformen gegebenenfalls eine im Wesentlichen regelmäßige Abfolge bilden.

7. Der Stator gemäß einem der Ansprüche 1 bis 6, **gekennzeichnet dadurch, dass** die internen Ringsegmente (46) Öffnungen (80) oder Höhlungen (80) umfassen, in denen die Verbindungsblätter (38) befestigt sind, wobei zumindest eine oder jede Befestigung zwischen einem Segment und einem Verbindungsblatt (38) in einer Öffnung (80) oder Höhlung (80) ein Plättchen und/oder ein Befestigungsmaterial und/oder eine Elastomerdichtung wie Silikon umfasst.

8. Der Stator gemäß einem der Ansprüche 1 bis 7, **gekennzeichnet dadurch, dass** zumindest eine oder jede der internen Plattformen (42) profiliert ist und ein Profil umfasst, das einen axialen Teil (68) hat, der sich im Wesentlichen axial erstreckt, und zwei radiale Teile (70), die sich im Wesentlichen radial nach innen von dem axialen Teil (68) aus erstrecken, wobei jedes radiale Teil (70) an einem der stromaufwärtigen und stromabwärtigen Enden des axialen Teils (68) angeordnet sind, und wobei jede Kontaktoberfläche (72) auf einer der radialen Teile (70) ausgebildet ist.

9. Der Stator gemäß einem der Ansprüche 1 bis 8, **gekennzeichnet dadurch, dass** zumindest eines oder jedes der Stützblätter (36) aus einem integralen Formteil ist, vorzugsweise durch additive Herstellung auf der Grundlage von Metallpulver wie Titanpulver und/oder zumindest eines oder jedes interne Segment (46) aus einem Kompositmaterial ist, insbesondere mit Fasern und einer organischen Matrix wie Polyetherimid oder Polyester.

10. Der Stator gemäß einem der Ansprüche 1 bis 9, **gekennzeichnet dadurch, dass** zumindest eines oder jedes Segment (42) zumindest eine, vorzugsweise eine Mehrzahl von entsprechenden Kontaktflächen umfasst, die dazu bestimmt sind, bei ihrem Zusammenbau mit jeder Oberfläche einer assoziierten Plattform in Kontakt zu kommen.

11. Der Stator gemäß einem der Ansprüche 1 bis 10, **gekennzeichnet dadurch, dass** zumindest eine oder jede interne Plattform (42) eine interne Rille umfasst, die radial nach innen offen ist, wobei das Segment (42) einen Teil mit geringerer radialer und/oder axialer Dicke umfasst, der in die interne Rille des assoziierten Stützblattes (36) eingeführt ist.

12. Der Stator gemäß einem der Ansprüche 1 bis 11, **gekennzeichnet dadurch, dass** er ein äußeres Gehäuse (28) umfasst, dass durch zwei Halbschalen ausgebildet ist, wobei jede mit einer halbkreisförmigen Wand und axialen Befestigungsflanschen (64) zum Verbinden der zwei Halbschalen versehen ist, und wobei eine interne Plattform (42) eines Stützblattes (36) mit jedem axialen Flansch (64) entlang des Umfanges ausgerichtet ist.

13. Der Stator gemäß einem der Ansprüche 1 bis 12, **gekennzeichnet dadurch, dass** jede interne Plattform (42) zwei gegenüberliegende Ränder entlang des Umfangs der Reihe von Blättern hat, wobei das Stützblatt (36), das jeder Plattform (42) entspricht, zumindest einen oder mehrere Befestigungszapfen (30) hat, die beabstandet von den besagten Rändern angeordnet sind, vorzugsweise beabstandet von jedem axialen Flansch (64) einer Halbschale.

14. Eine Turbomaschine (2) umfassend einen Stator, **dadurch gekennzeichnet, dass** der Stator gemäß einem der Ansprüche 1 bis 13 ist, wobei der Stator gegebenenfalls ein Stator eines Niederdruckkompressors (4) ist.

## Claims

1. Stator of an axial turbomachine (2), in particular of a compressor (4; 6), the stator comprising:
an annular row of stator blades which comprise integral support blades (36) with internal platforms (42) and connection blades (38); the support blades (36) and the connection blades (38) being positioned axially at the same position, forming an annular row of blades (36, 38) equally spaced apart from each other;
an internal shroud (32) formed by the internal platforms (42) of the support blades (36) and by the internal shroud segments (46) fixed to the connection blades (38);
**characterised in that**
at least one internal platform (42) of a support blade (36) comprises at least two contact surfaces (72) which are generally perpendicular to the rotation axis (14) of the turbomachine (2), and which are in contact with a common internal segment (46) so as to be able to block it.

2. Stator according to claim 1, **characterised in that** it comprises at least one integral casing (40) which comprises a plurality of support blades (36) and an internal platform (42) which is common to each of the support blades (36) thereof, the casing (40) optionally comprises an external platform (44) which is common to each of the support blades (36) thereof.

3. Stator according to claim 2, **characterised in that** at least one or each casing (40) comprises a plurality of, preferably three, support blades (36) which forming an angular portion of the annular row of blades, the mean inclination of the chord line of each support blade (36) of the casing (40) relative to the rotation axis (14) is optionally greater than 5°, preferably greater than 10°, more preferably greater than 20°.

4. Stator according to any one of claims 1 to 3, **characterised in that** each internal platform (42) of a support blade (36) comprises at least two contact surfaces (72) which are generally perpendicular to the rotation axis (14) of the turbomachine (2) and which are in contact with the same internal segment (46), preferably at least one or each internal platform (42) of a support blade (36) comprises at least four contact surfaces (72) which are generally perpendicular to the rotation axis (14) of the turbomachine (2) and which are in contact with two separate internal segments (46).

5. Stator according to any one of claims 1 to 4, **characterised in that** each internal segment (46) is adjusted mechanically to each internal platform (42) with which it is in contact in order to enable retention by means of interlocking, preferably each pair of contact surfaces (72) which cooperates with the same internal segment (46) is adjusted mechanically with the segment (46) in order to enable radial retention by means of interlocking.

6. Stator according to any one of claims 1 to 5, **characterised in that** the internal segments (42) are interposed between the internal platforms (42) of support blades (36), optionally the segments and the platforms form an alternating arrangement which is generally regular.

7. Stator according to any one of claims 1 to 6, **characterised in that** the internal shroud segments (46) comprise openings (80) or cavities (80) in which the connection blades (38) are fixed, at least one or each attachment between a segment and a connection blade (38) in an opening (80) or a cavity (80) comprising a pad and/or a sealing material and/or an elastomer joint such as silicone.

8. Stator according to any one of claims 1 to 7, **characterised in that** at least one or each internal platform (42) is profiled and comprises a profile which has an axial portion (68) which extends principally axially and two radial portions (70) which extend principally radially inwardly from the axial portion (68), each radial portion (70) being arranged at one of the upstream and downstream ends of the axial portion (68), each contact surface (72) being formed on one of the radial portions (70).

9. Stator according to any one of claims 1 to 8, **characterised in that** at least one or each support blade (36) is integral, preferably by means of additive production based on powder, optionally a metal powder such as a titanium powder; and/or at least one or each internal segment (46) is produced from a composite material, in particular with fibres and an organic matrix such as polyetherimide or polyester.

10. Stator according to any one of claims 1 to 9, **characterised in that** at least one or each segment (42) comprises at least one, preferably a plurality of, corresponding contact surface(s) which is/are intended to move into contact with each contact surface of an associated platform during their assembly.

11. Stator according to any one of claims 1 to 10, **characterised in that** at least one or each internal platform (42) comprises an internal groove which is radially open inwardly, the segment (42) comprises a portion of smaller radial and/or axial thickness which is introduced into the internal groove of the associated support blade (36).

12. Stator according to any one of claims 1 to 11, **characterised in that** it comprises an outer housing (28) which is formed by two half-shells, each provided with a semi-circular wall and axial fixing flanges (64) in order to join the half-shells, an internal platform (42) of a support blade (36) being aligned with each axial flange (64) along the circumference.

13. Stator according to any one of claims 1 to 12, **characterised in that** each internal platform (42) has two edges opposite each other along the circumference of the row of blades, the support blade (36) corresponding to each platform (42) having at least one or more fixing shaft(s) (30) which is/are arranged remote from the edges, preferably remote from each axial flange (64) of a half-shell.

14. Turbomachine (2) comprising a stator, **characterised in that** the stator is in accordance with any one of claims 1 to 13, optionally the stator is a stator of a low-pressure compressor (4).
